# EUROPÄISCHE PATENTSCHRIFT

(11) **EP 1 195 299 B1**
(45) Veröffentlichungstag und Bekanntmachung des Hinweises auf die Patenterteilung: **10.11.2004**
(21) Anmeldenummer: 01120737.0
(22) Anmeldetag: 06.09.2001
(51) Int. Cl.: B60R 16/02, B60K 35/00

(54) **Vorrichtung zur zentralen Anzeige fahrzeugbezogener Daten in einem Kraftfahrzeug**
Apparatus for the central display of vehicle related data in a motor vehicle
Appareil pour l'affichage central des données destinées à un véhicule dans un véhicule automobile

(30) Priorität: 21.09.2000 DE 10046904
(43) Veröffentlichungstag der Anmeldung: 10.04.2002
(73) Patentinhaber: MAN Nutzfahrzeuge Aktiengesellschaft, 80995 München (DE)
(72) Erfinder: Spaderna, Josef, Dipl.-Ing., 85229 Markt Indersdorf (DE); Zabel, Tilo, Dipl.-Ing., 80995 München (DE); Eigner, Werner, 86156 Augsburg (DE)

(56) Entgegenhaltungen:
- EP-A- 0 701 926
- WO-A-97/13657
- DE-A- 19 604 351
- DE-A- 19 743 023

## Beschreibung

Die Erfindung betrifft eine Vorrichtung zur zentralen Anzeige fahrzeugbezogener Daten in einem Kraftfahrzeug nach dem Oberbegriff des Patentanspruches 1.

Eine derartige aus der EP 0 701 926 A2 bekannte Vorrichtung beinhaltet ein Display, auf welchem neben den fahrzeugbezogenen Daten in einer Menüdarstellung auch Betriebsarten und Funktionen eines Radiogerätes durch jeweilige Menüeinträge dargestellt sind. Durch Betätigen eines Bedienstellers können mit einem Cursor die Daten der jeweiligen Menüeinträge angewählt werden und die gewünschte Betriebsart und Funktion des Radiogerätes ausgewählt werden.

Bei einer aus der DE 196 04 351 A1 bekannten Vorrichtung werden die fahrzeugbezogenen Daten für verschiedene Funktionen in einem Kraftfahrzeug an einem im Fahrersichtfeld angeordneten Display angezeigt. Mit Hilfe eines am Display verstellbaren Cursors, können durch Betätigung eines in Fahrernähe, beispielsweise direkt am Lenkrad, in Form eines Cursorrades angeordneten Bedienstellers die angezeigten Daten bzw. Funktionen ausgewählt werden. Für die verschiedenen Daten bzw. Funktionen sind auf dem Display in Reihen und/oder Zeilen Symbole und/oder Worte vorgesehen. Ohne nähere Angaben ist auch der Radiobetrieb erwähnt.

Aus der EP 0 742 541 B1 ist ein Informationsdisplay in einem Kraftfahrzeug bekannt, auf dem eine Vielzahl von Symbolen dargestellt ist, denen jeweils eine bestimmte, auf verschiedene Teile des Kraftfahrzeugs bezogene Informationen zugeordnet sind.

Aus der DE 41 40 864 A1 ist eine Vorrichtung für eine multifunktionelle Anzeige von Diagnosesignalen am Armaturenbrett eines Kraftfahrzeugs bekannt, mit welcher fahrzeugbezogene Störsignale gesteuert angezeigt werden können.

Aus der EP 0 884 220 A2 ist eine Vorrichtung zur Anzeige und Steuerung von Funktionen in einem Kraftfahrzeug bekannt, welche mindestens ein Master-Bedienfeld und mindestens ein Slave-Bedienfeld, die miteinander bidirektional verbunden sind, aufweist. Die vorhandenen Funktionen können dargestellt und angesteuert werden.

Aufgabe der Erfindung ist es eine Vorrichtung der eingangs genannten Art zu schaffen, bei welcher eine einfache Bedienung des Radiogeräts mit Hilfe des Bedienstellers erreicht wird.

Diese Aufgabe wird erfindungsgemäß durch die kennzeichnenden Merkmale des Patentanspruches 1 gelöst.

Vorteilhafte Weiterbildungen der Erfindung sind in den Unteransprüchen gekennzeichnet.

Bei der Erfindung werden Daten der jeweiligen Funktionen des Radiobetriebs als Menüeinträge am Display angezeigt und mittels des Cursors bei Betätigung des Bedienstellers ausgewählt und bedarfsweise aktiviert. Das eingebaute Radiogerät besitzt in bekannter Weise mehrere Betriebsarten, beispielsweise besitzt das Radiogerät einen Tuner, mit dem bestimmte Frequenzen von Radiosendern angewählt werden können. Außerdem kann das Radiogerät einen CD-Player gegebenenfalls mit Wechselautomatik und ein Kassettengerät zum Abspielen von Tonbandkassetten aufweisen. Das Radiogerät kann auch separat bedient werden.

Die verschiedenen Betriebsarten des Radiogerätes können bei eingeschaltetem Radio in einer Menüdarstellung mit jeweils zugehörigen Menüeinträgen angezeigt werden.

Die hierzu vorgesehenen Menüeinträge sind vorzugsweise in einer oder mehreren Menüebenen des Displays in horizontalen Darstellungsbereichen angeordnet. Mittels des Bedienstellers, mit dem nur bei eingeschaltetem Betriebsstrom das Radiogerät bedienbar ist, kann der Cursor horizontal in zwei Richtungen entlang der in jeweiligen Zeilen angeordneten Menüeinträge bewegt werden. Der Bediensteller besitzt hierzu vorzugsweise einen Cursorsteller. Die jeweilige horizontale Bewegungsrich tung hängt dabei vorzugsweise von der Drehrichtung des vorzugsweise als Drehsteller ausgebildeten Cursorstellers ab. Bei einer Drehung des Drehstellers nach links bewegt sich der Cursor in der Zeile der Menüebene horizontal nach links und bei einer Drehung nach rechts, bewegt sich der Cursor in der Zeile der Menüebene horizontal nach rechts. Der Zeilenwechsel der Cursors erfolgt folgendermaßen: Wenn der Cursor eine Menüeintragung am Ende einer Zeile erreicht hat und seine Position zur nächstfolgenden Zeile geändert werden soll, wird der Drehsteller in einer ersten Richtung, insbesondere nach rechts weitergedreht. Hierbei bewegt sich der Cursor zum Menüeintrag an den Anfang der nächstfolgenden Zeile. Bei einem Zeilenwechsel in entgegengesetzter Richtung wird der Cursor vom Menüeintrag am Anfang der Zeile zum Menüeintrag am Ende der vorhergehenden Zeile durch Drehen des Drehstellers in die andere zweite Drehrichtung, insbesondere nach links bewegt. Um eine bestimmte Betriebsart oder Funktion auszuwählen, kann der Bediensteller neben dem Drehsteller eine durch Druck betätigbare Stelleinrichtung aufweisen, die vorzugsweise in den Drehsteller integriert ist. Durch Druck auf diese Stelleinrichtung, beispielsweise auf den Drehsteller kann die jeweilige Betriebsart oder Funktion, welche der Cursor gerade am ausgewählten Menüeintrag anzeigt, bestätigt und aktiviert werden. Der Cursor kann in herkömmlicher Weise ausgebildet sein. Bevorzugt wird die Cursorfunktion durch eine invertierte Darstellung des gerade angewählten Menüeintrages kennlicht gemacht. Durch den Cursor wird eine Auswahlmarkierung des gerade angewählten Menüeintrages bewirkt. Der Cursor ist daher derart ausgebildet, dass er die Funktion dieser Auswahlmarkierung für eine bequeme Wahrnehmung durch den Fahrzeuglenker erfüllt.

Der Bediensteller befindet sich in Reichweite vom Fahrzeuglenker, beispielsweise am Armaturenbrett, so dass eine einfache Bedienung gewährleistet ist. Das Radiogerät kann an einem vom Fahrzeuglenker entfernten Einbauort im Fahrzeug angeordnet sein. Dieser Einbauort kann auch an einer vom hinter dem Lenkrad sitzenden Fahrzeuglenker ungünstig zu erreichenden Stelle liegen. Da der Bediensteller vom Fahrzeuglenker gut zu erreichen ist, wird eine bequeme Bedienung des Radiogerätes mit Hilfe des im Fahrersichtfeld angeordneten Displays gewährleistet. Das Display befindet sich vorzugsweise am Armaturenbrett zwischen einer Anzeigeeinrichtung für die Fahrzeuggeschwindigkeit und einer Drehzahlanzeigeeinrichtung, welche die Motordrehzahl angibt.

Am Display ist vorzugsweise ein horizontaler Darstellungsbereich vorgesehen, welcher vom Bediensteller nicht beeinflussbare Darstellungen, d. h. autonome fahrzeugbezogene Darstellungen bzw. Daten beinhaltet. Diese fahrzeugbezogenen autonomen Datendarstellungen können eine Stop-Kennzeichnung, Dauerbremsanzeige, Retarderstufenwahl, Motorbremseingriff und/oder Redartereingriff enthalten. Weitere autonome Datendarstellungen können auf die Ganganzeige für ein Handschaltgetriebe oder ein automatisiertes Schaltgetriebe bzw. Automatgetriebe, Adaptive Cruise Control (ACC) und dergleichen bezogen sein. Vorzugsweise befindet sich der horizontale Darstellungsbereich für diese autonomen fahrzeugbezogenen Datendarstellungen im Display in der obersten Ebene. Es kann auch ein anderer geeigneter Ort für diese autonomen Darstellungen vorgesehen sein.

In vorteilhafter Weise erhält man hierdurch eine Vorrichtung, mit welcher eine zentrale Darstellung von fahrzeuginternen bzw. fahrzeugrelevanten Daten sowie Komfortanzeigen, durch welche eine bequeme Bedienung des im Fahrzeug eingebauten Radiogerätes erreicht wird, möglich sind. Im Menü anwählbare Funktionen entsprechen mehreren oder allen vom Radiogerät bereitgestellten Funktionen.

Am Bediensteller können ferner Auswähltasten vorgesehen sein, durch die bestimmte fahrzeugbezogene Informationen, welche Betriebszustände von Fahrzeugteilen betreffen, abgerufen und unter Ausblendung der radiobezogenen Darstellungen am Display angezeigt werden. Beispielsweise können hierdurch in einer Menüdarstellung am Display Fahrzeugdaten dargestellt werden, die den Zustand der Bremsbeläge, die Batteriespannung und dergleichen betreffen, und durch Cursorbedienung angewählt und abgefragt werden.

Anhand der Figuren wird an einem Ausführungsbeispiel die Erfindung noch näher erläutert.

Es zeigt:
- Figur 1: als Blockschaltbild die logische Verknüpfung der Bestandteile eines Ausführungsbeispiels der Erfindung;
- Figur 2: eine Displaydarstellung bei eingeschaltetem Radiogerät;
- Figur 3: eine Menüdarstellung, die auf die Betriebsarten und Funktionen des Radiogerätes bezogen ist;
- Figur 4: Funktionsdarstellungen am Display bei der auf Radioempfang eingestellten Betriebsart;
- Figur 5: Funktionsdarstellungen am Display bei auf Kassettenbetrieb eingestellter Betriebsart des Radiogerätes;
- Figur 6: verschiedene auswählbare Menüeinträge einer ersten Funktion bei auf CD-Player eingestellter Betriebsart des Radiogerätes;
- Figur 7: verschiedene auswählbare Menüeinträge bei einer zweiten Funktion des CD-Players am Display;
- Figur 8: verschiedene auswählbare Menüeinträge einer dritten Funktion des CD-Players am Display;
- Figur 9: eine Displaydarstellung mit einer autonomen Meldung vom Fahrbetrieb; und
- Figur 10: ein Blockschaltbild zur Erläuterung des Zusammenwirkens zwischen Drehsteller, Display und Radiogerät.

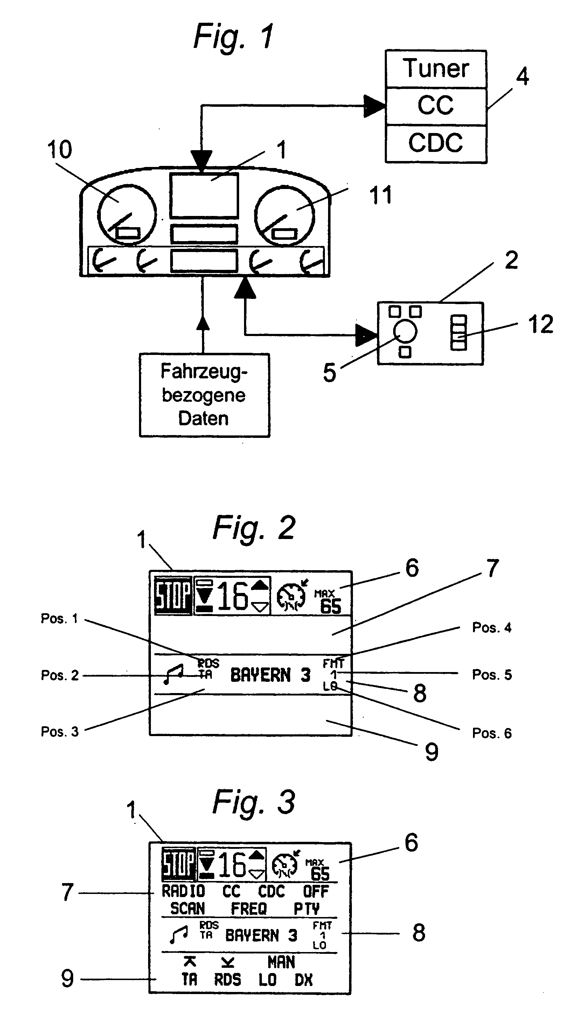

Das in Figur 1 dargestellte Ausführungsbeispiel besitzt für eine zentrale Anzeige fahrzeugbezogener und radiobezogener Daten ein Display 1, welches im Fahrersichtfeld angeordnet ist. Beim dargestellten Ausführungsbeispiel befindet sich das Display 1 zwischen einer Drehzahlanzeigeeinrichtung 10 und einer Anzeigeeinrichtung 11 für die Fahrzeuggeschwindigkeit. In Vorwärtsfahrrichtung gesehen, befindet sich die Anordnung am Armaturenbrett vor dem Lenkrad des Kraftfahrzeugs. Das Kraftfahrzeug ist vorzugsweise ein Nutzfahrzeug, beispielsweise ein Lastkraftwagen oder Omnibus. Ein Radiogerät 4, welches einen Tuner, ein Kassettengerät und einen CD-Player aufweisen kann, befindet sich an einer geeigneten Stelle am Armaturenbrett oder im Fahrzeug. Das Radiogerät 4 kann außerhalb des unmittelbaren Zugriffsbereichs der Fahrzeuglenkers angeordnet sein. Ein Bediensteller 2 befindet sich an einer Stelle, insbesondere im Bereich des Armaturenbretts, welche vom Fahrzeuglenker gut zu erreichen ist. In Kombination mit den Darstellungen am Display 1 kann mit Hilfe des Bedienstellers 2 der Betrieb des Radiogerätes 4 gesteuert werden. Die jeweiligen vom Radiogerät 4 ausgeübten Betriebsarten und Funktionen werden am Display 1, wie im einzelnen noch erläutert wird, angezeigt. Das in Figur 1 dargestellte Blockschaltbild zeigt die logische Verknüpfung von Bediensteller 2, Radiogerät 4 und Display 1. Diese logische Verknüpfung kann in der Praxis über einen Datenbus, insbesondere einen seriellen Datenbus verwirklicht werden. Über diesen oder einen weiteren separaten Datenbus werden auch die fahrzeugbezogenen Daten und Informationen, die für einen einwandfreien Fahrbetrieb erforderlich sind und von anderen über den Datenbus zu einem Netz verbundenen Einrichtungen geliefert werden, dem Display 1 zugeleitet und durch Symbole oder Buchstaben dargestellt. Mit Hilfe des Bedienstellers 2 können diese betriebsbezogenen Anzeigen für eine Darstellung am Display 1 wahlweise abgerufen werden. Hierzu sind am Bediensteller verschiedene Tastenschalter 12 vorgesehen.

Beim dargestellten Ausführungsbeispiel kann durch Betätigen eines der entsprechenden Tastenschalter 12 am Bediensteller 2 das Radiogerät eingeschaltet werden. Diese Einschaltung ist jedoch nur bei eingeschaltetem Betriebsstrom möglich.

Wenn das Radio bei ausgeschaltetem Betriebsstrom mittels der am Radiogerät 4 vorgesehen Einstellmittel betrieben wird, ist weder eine Bedienung über den Bediensteller 2 noch eine Anzeige von Informationen über den Betrieb des Radiogerätes 4 auf dem Display 1 vorgesehen. Das Radiogerät nimmt jedoch im ausgeschalteten Zustand an der Kommunikation im Verbund der an den Datenbus angeschlossenen Geräte, Sensoren und Einrichtungen, welche die fahrzeugbezogenen Daten liefern, teil. Das Radiogerät 4 kann bei nicht bestromtem Display 1 bzw. Bediensteller 2 vollständig bedient werden.

Wenn bei eingeschaltetem Betriebsstrom das Radiogerät 4 durch einen am Radiogerät vorgesehen Einschalttaster oder durch einen entsprechenden Tastenschalter 12 am Bediensteller 2 eingeschaltet wird, erfolgt eine Anzeige am Display 1. Hierzu empfängt das Display 1 vom Radiogerät 4 eine entsprechende Nachricht. Der Einschaltzustand des Radiogerätes kann beispielsweise durch eine Anzeige, wie sie in Figur 2 dargestellt ist, kenntlich gemacht werden. Hierzu kann ein Schriftzug, beispielsweise BAYERN 3 als Radiosenderhinweis, in einem horizontalen Darstellungsbereich 8 des Displays 1 autonom angezeigt werden. Der Radiosenderhinweis gibt beispielsweise den zuletzt angewählten Radiosender an. Ferner können in diesem Darstellungsbereich 8 weiter Symbole in Positionen 1 bis 6 wieder gegeben werden, welche die Einstelllungen des Radiogerätes angeben. Es werden hierzu Symbole verwendet, wie sie bei Radiogeräten üblich sind.

In einem oben liegenden horizontalen Darstellungsbereich 6 des Displays 1 werden autonome, d. h. vom Bediensteller 2 nicht beeinflussbare fahrzeugbezogene und betriebsnotwendige Informationen angezeigt. Diese Informationen werden auch bei ausgeschaltetem Radio am Display 1 wiedergegeben. Der Darstellungsbereich für die autonomen fahrzeugbezogenen und betriebsnotwendigen Informationen kann auch an einer anderen geeigneten Stelle des Displays 1 vorgesehen sein.

Durch entsprechende Betätigung des Bedienstellers 2, beispielsweise eines der Tastenschalter 12 kann die Menüdarstellung am Display 1 für den Radiobetrieb aktiviert werden. In der Figur 3 ist als Beispiel eine Menüdarstellung mit Menüebenen am Display 1 gezeigt. Die Menüdarstellung besitzt drei Menüebenen, welche in horizontalen Darstellungsbereichen 7, 8 und 9 des Displays 1 enthalten sind. Die verschiedenen Menüeinträge können Symbole sowie Schriftzüge, welche zur Kenntlichmachung der jeweiligen Einstellungen des Radiogerätes 4 üblich sind, enthalten. Der Menüaufbau ist auf den Bediensteller 2 und die Einstellmöglichkeiten des Radiogerätes 4 abgestimmt, so dass über den Bediensteller 2 die Einstellungen mit möglichst wenig Betätigungen vorgenommen werden können und eine Vereinfachung der Bedienfolge erreicht wird. Die im Menü anwählbaren Funktionen entsprechen mehreren oder allen vom Radiogerät 4 bereitgestellten Funktionen.

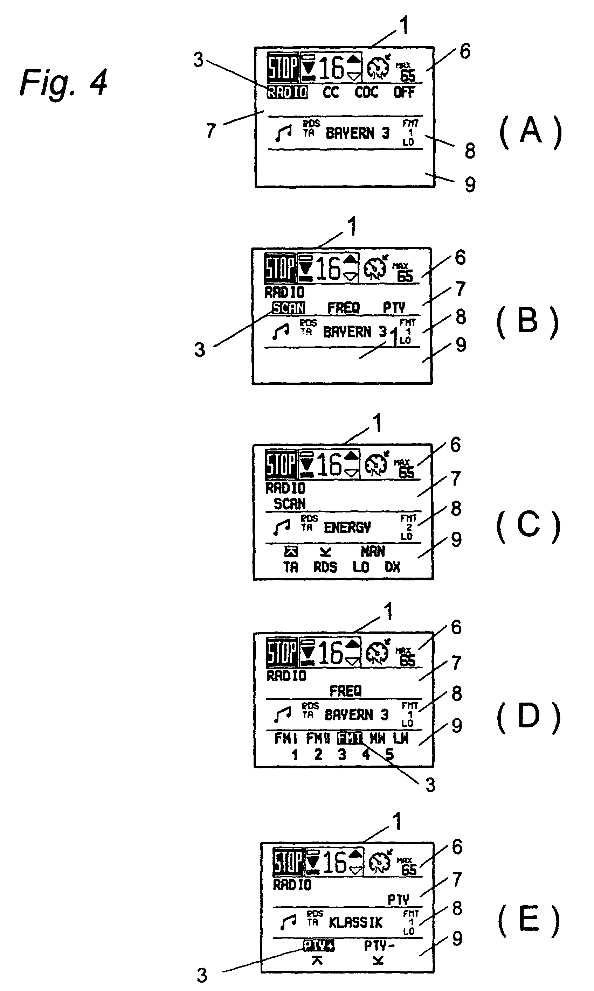

Wie insbesondere aus den Display-Darstellungen (A) bis (E) der Figur 4 zu ersehen ist, können mit Hilfe eines Cursors 3, dessen Position durch die jeweilige invertierte Darstellung des Menüeintrags kenntlich gemacht wird, die verschiedenen Menüeinträge angewählt werden. Die Kenntlichmachung des angewählten Menüeintrages kann auch anderweitig erfolgen, z.B. durch Blinken. Das Anwählen erfolgt durch schrittweises Verstellen eines als Drehsteller 5 ausgebildeten Cursorstellers, am Bediensteller 2. Der Drehsteller 5 kann durch schrittweises Verdrehen in aufeinander folgende Drehwinkelpositionen gebracht werden. Hierbei wird der Cursor 3 ebenfalls schrittweise in den jeweiligen Menüebenen und -zeilen zu den anzuwählenden Menüeinträgen gebracht. Bei einer Drehung des Drehstellers 5 nach rechts, bewegt sich der Cursor 3 in der jeweiligen Menüebene horizontal nach rechts. Bei einer Drehung des Drehstellers 5 nach links, bewegt sich der Cursor 3 in horizontaler Richtung in der jeweiligen Menüebene bzw. -zeile nach links. Bei jedem Drehschritt bewegt sich der Cursor auf den in der ausgewählten Bewegungsrichtung nächstfolgenden Menüeintrag. Wenn der Cursor 3 sich am Ende einer Zeile der Menüeinträge befindet und der Drehsteller 5 um einen Schritt nach rechts weitergedreht wird, wechselt der Cursor 3 an den Anfang der nächstfolgenden Zeile der Menüeinträge. Wenn der Cursor 3 sich am Anfang einer Zeile der Menüeinträge befindet und der Drehsteller 5 nach links gedreht wird, wechselt der Cursor 3 seine Position an das Ende der vorhergehenden Zeile der Menüeinträge.

Wie aus der Figur 3 zu ersehen ist, befinden sich im horizontalen Darstellungsbereich 7 in zwei Zeilen einer Menüebene die verschiedenen Betriebsarten des Radiogerätes, welche mit RADIO für den Radioempfang, mit CC für den Betrieb des Kassettengerätes, mit CDC für den Betrieb des CD-Players und mit OFF für das Ausschalten bezeichnet sind. In der darunter liegenden Zeile sind Funktionen, welche bei den oben genannten Betriebsarten, insbesondere beim Radioempfang anwählbar sind, dargestellt. In dem darunter befindlichen horizontalen Darstellungsbereich 8 befinden sich die zusammen mit der Figur 2 schon erläuterten Informationen, welche den Betriebszustand des Radiogerätes 4 kennzeichnen.

Im untersten horizontalen Darstellungsbereich 9 befindet sich die dritte zweizeilige Menüebene, welche in den jeweiligen Menüeinträgen Funktionssymbole und Funktionsschriftzüge enthält, mit denen bestimmte Unterfunktionen beim Radioempfang, beim CD-Playerbetrieb und gegebenenfalls beim Betrieb des Kassettengerätes eingestellt werden können.

Wenn mit Hilfe des Drehstellers 5 ein bestimmter Menüeintrag angewählt ist, beispielsweise der Menüeintrag RADIO, wie es in Figur 4 (A) gezeigt ist, wird die entsprechende Stellung des Cursors 3 durch invertierte Darstellung dieses Menüeintrages kenntlich gemacht. Durch Drücken des Drehstellers 5 wird diese Auswahl bestätigt und am Display 1 werden nur noch der ausgewählte Menüeintrag RADIO und die in der nachfolgenden Zeile angegebenen Funktionen, welche bei dieser Betriebsart ausgewählt werden können, dargestellt, wie es die Figur 4 (B) zeigt. Wenn mit Hilfe des Drehstellers der Menüeintrag SCAN angewählt ist, wird diese Funktion durch die invertierte Darstellung, welche auch die Cursorstellung wiedergibt, angegeben. Durch Drücken des Drehstellers 5 wird die dargestellte Auswahl bestätigt und die entsprechende Funktion aktiviert. Auf dem Display werden dann die anderen in der gleichen Zeile vorgesehenen Menüeinträge ausgeblendet und nicht mehr dargestellt, wie es die Figur (C) zeigt. Auf dem Display 1 erscheinen weitere Menüeinträge im untersten horizontalen Darstellungsbereich 9 in zwei Zeilen einer Menüebene. Diese Menüeinträge können durch Drehen und Drücken des Drehstellers 5, wie oben erläutert, ebenfalls angewählt und aktiviert werden.

In der Figur 4 (D) ist die Displaydarstellung bei der Aktivierung der Funktion FREQ darstellt. Auch hier können durch entsprechende Bewegungen des Cursors 3 zweizeilig im horizontalen Darstellungsbereich 9 enthaltene Menüeinträge angewählt und aktiviert werden, wie es oben schon erläutert wurde. Bei der Displaydarstellung der Figur 4 (E) ist die Radiofunktion PTY aktiviert. Auch hier können die im unteren horizontalen Darstellungsbereich enthaltenen Menüeinträge durch Drehen des Drehstellers 5 angewählt und durch Drücken des Drehstellers 5 aktiviert werden.

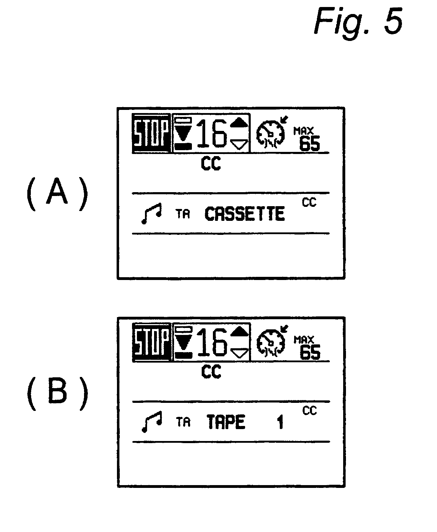

In der Figur 5 sind in den beiden Displaydarstellungen (A) und (B) Betriebszustände bei der aktivierten Betriebsart des Tonbandkassettenbetriebs CC dargestellt.

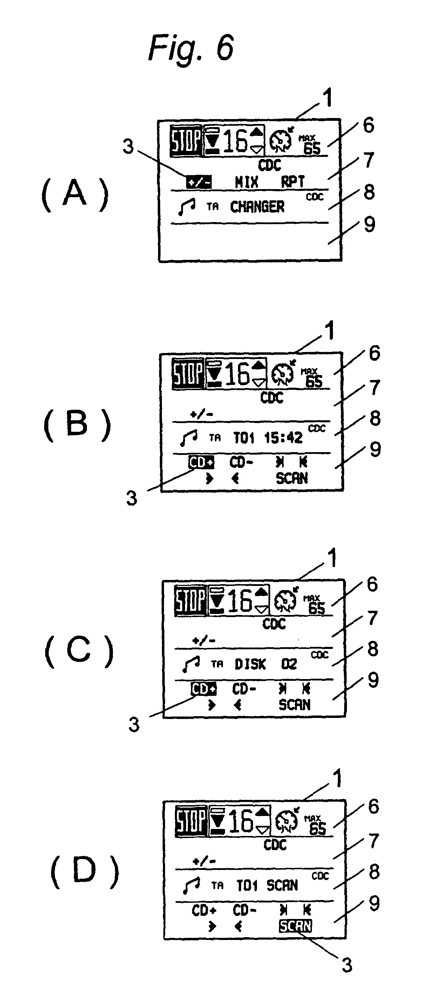

Die Figuren 6 bis 8 zeigen verschiedene Funktionen und Betriebszustände der aktivierten Betriebsart des CD-Playerbetriebs CDC. In der Figur 6 ist mit dem Cursor 3 der in der zweiten Zeile der obersten Menüebene im Darstellungsbereich 7 an erster Stelle liegende Menüeintrag ausgewählt. Diese Darstellung ist in Figur 6 (A) gezeigt. Durch Drücken des Drehstellers 5 werden die in der zweiten Zeile vorhandenen übrigen Funktionen ausgeblendet, so dass für die Betriebsart CDC in der ersten Zeile der Menüebene nur noch die ausgewählte Funktion in der zweiten Zeile angezeigt wird. Ferner erscheinen im horizontalen Darstellungsbereich 9 des Displays 1 verschiedene Unterfunktionen, die wahlweise aktiviert werden können. Durch entsprechende Auswahl, wie sie in den Figuren 6 (B), (C) und (D) gezeigt sind, können diese Funktionen beim Betrieb des CD-Players angewählt und aktiviert werden.

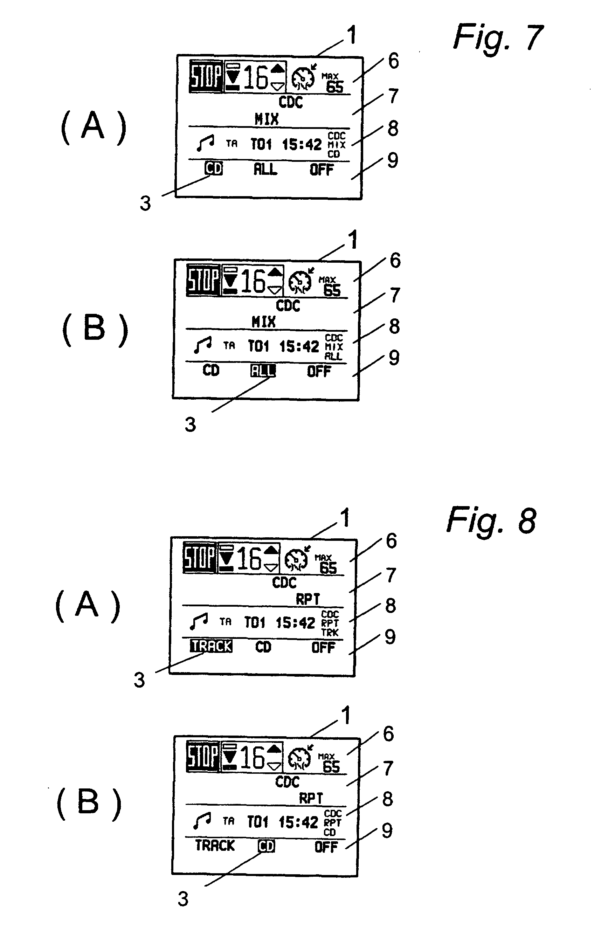

In den Displaydarstellungen der Figuren 7 (A) und (B) ist für die Betriebsart CDC die Funktion MIX mit den anwählbaren weiteren Unterfunktionen, welche in anwählbaren Menüeinträgen im horizontalen Darstellungsbereich 9 enthalten sind, gezeigt. In den Displaydarstellungen der Figuren 8 (A) und (B) ist bei der Betriebsart CDC in der zweiten Zeile der ersten Menüebene im Darstellungsbereich 7 die Funktion RPT ausgewählt und aktiviert, wobei im horizontalen Darstellungsbereich 9 hierzu geeignete Unterfunktionen an entsprechenden Menüstellen angegeben sind. Auch diese können mit Hilfe des Drehstellers 5 angewählt und aktiviert werden.

Beim dargestellten Ausführungsbeispiel beinhaltet der Drehsteller 5 auch einen Drucktastenschalter, mit welchem die jeweils angewählte Betriebsart und Funktion bestätigt und aktiviert werden kann. Es ist natürlich auch möglich für die Aktivierung einen separaten Tastenschalter vorzusehen.

Die Darstellungen am Display 1, welche den Betrieb des Radiogerätes 4 betreffen, können durch entsprechende Betätigungen von Tastenschaltern 12 ausgeblendet werden, insbesondere wenn fahrzeugbezogene Daten am Display 1 angezeigt und abgefragt werden sollen. Bei Wiedereintritt in die Menüdarstellung für das Radiogerät 4 wird der aktuelle Betrieb des Radiogerätes 4 am Display 1 dargestellt. Hierdurch wird einer parallelen Bedienung des Radiogerätes 4 mittels der am Radiogerät vorgesehen Einstelleinrichtungen Rechnung getragen. Menüeinstellungen des Radiogerätes 4 am Display 1 werden bei angewähltem Radiomenü mit der gerade aktiven Auswahlmarkierung, welche der Cursor 3 vermittelt, angezeigt. Dies erfolgt unabhängig davon, ob die Einstellungen am Radiogerät selbst oder am Bediensteller 2 vorgenommen werden. Die Menüeinstellungen des Radiogerätes 4 am Display 1 werden dann nicht mehr angezeigt, wenn die Einstellungen am Radiogerät 4 selbst vorgenommen werden.

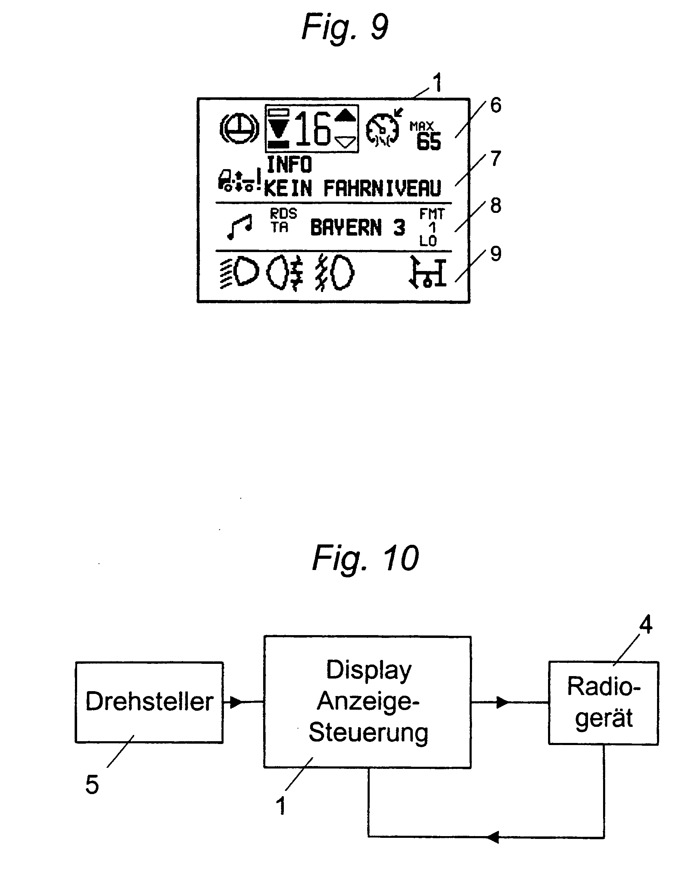

Wie aus der Fig. 9 zu ersehen ist, werden zur Berücksichtigung von Sicherheitsaspekten vom Betrieb des Fahrzeugs verursachte autonome Meldungen, wie Hinweise oder Warnungen angezeigt. Beim dargestellten Ausführungsbeispiel in der Fig. 9 ist beispielsweise die autonome Meldung "kein Fahrniveau" im Darstellungsbereich 7 angegeben. Die vorherige aktuelle Auswahldarstellung in diesem Bereich wird sofort beendet und die betriebsnotwendige Meldung (Hinweis oder Warnung) sofort am Display 1 dargestellt. Diese autonom rollierenden Hinweise bzw. Warnungen beenden die Anzeige für den Radiobetrieb. Wie die Fig. 9 zeigt, kann auch der Darstellungsbereich 9 für die autonom rollierenden Meldungen zur Verfügung gestellt werden. Hierdurch ist die temporäre Darstellung nicht beeinflussbarer Fahrzeugzustände, die vorzugsweise sicherheitsbezogene Hinweise und Warnungen enthalten, möglich.

Um eine durch den Betrieb des Fahrzeugs erzeugte autonome Meldung zu überblenden, muss der Fahrzeuglenker bewusst wieder die Auswahldarstellung des radiobezogenen Menüs aktivieren. Durch Betätigen des hierfür vorgesehenen Tastenschalters 12 wird dies erreicht. Ohne Betätigung des Bedienstellers wird die Menüdarstellung nach einer bestimmten Zeit, beispielsweise nach ca. 30 Sekunden selbsttätig verlassen. Aus der Fig. 9 ist ferner zu ersehen, dass die autonom dargestellten Anzeigen für das Radiogerät 4 im Darstellungsbereich 8 mit den korrespondierenden Einstellungen im Radiomenü übereinstimmen. Änderungen der Einstellungen im Radiogerät 4 durch das Radiomenü werden gleichzeitig in der autonomen Anzeige der Radioeinstellung wirksam.

Wenn während des Einstellbetriebs (Einstellphase) des Radios vom Fahrzeug eine autonome Meldung (Hinweis, Warnung) kommt, wird dieser Einstellbetrieb unterbrochen. Nach Aktivierung der Menüauswahldarstellung für das Radiogerät ist der Einstellbetrieb von neuem zu beginnen.

Aus einem aktiven Untermenü bzw. einer angewählten Unterfunktion kann über eine separate Taste am Bediensteller 2 in eine höhere Menüebene gewechselt werden. Bei erreichtem Wechsel in die höhere Menüebene werden sämtliche dargebotenen Auswahlmöglichkeiten dieser Menüebene wieder eingeblendet. Die verlassene Menüebene, in welcher die Unterfunktion sich befindet, wird vollständig ausgeblendet oder wird in der beim Verlassen aktuell gültigen Einstellung weiterhin angezeigt, bis eine neue Auswahl in einer der übergeordneten Menüebenen getroffen wird.

Das Display 1 beinhaltet einen für die Anzeigesteuerung am Display zuständigen Rechner oder gleichwertigen Rechner (Anzeigesteuerung). Vom Bediensteller 2 bzw. Drehsteller 5 veranlasste Forderungen werden dem Display und seiner zugeordneten Rechnereinrichtung zugeleitet und von diesem an das Radiogerät 4 weitergegeben. Das Radiogerät 4 gibt eine Rückmeldung über die geänderte Einstellung an die Anzeigesteuerung des Displays 1 (Fig. 10). Die Anzeigesteuerung des Displays 1 generiert die erforderlichen Signale, durch welche die geänderte Einstellung des Radiogerätes am Display dargestellt wird. Das Display 1 mit seiner zugeordneten Anzeigesteuerung hat eine Masterfunktion, wie sich auch aus der Darstellung der Fig. 10 ergibt.

Mit der aus dem Bediensteller 2 und dem Display 1 bestehenden Kombination können in der oben beschriebenen Art und Weise auch weitere Geräte bedient werden.

## Patentansprüche

1. Vorrichtung zur zentralen Anzeige fahrzeugbezogener Daten in einem Kraftfahrzeug mit einem im Fahrersichtfeld angeordneten Display (1) und einem Cursor (3) zum Auswählen der angezeigten Daten durch Betätigen eines in Fahrernähe angeordneten Bedienstellers (2), wobei durch den Bediensteller (2) femer ein im Fahrzeug eingebautes Radiogerät (4), das eine selbständige, in sich bedienbare Einheit darstellt, bedienbar ist, und bei eingeschaltetem Radiogerät (4) in einer Menüdarstellung am Display (1) die Betriebsarten und Funktionen des Radiogerätes (4) durch jeweilige Menüeinträge dargestellt sind, **dadurch gekennzeichnet, dass** die Menüeinträge, welche die Radiobetriebsarten, wie Radioempfang, Kassettenbetrieb, CD-Playerbetrieb und Ausschalten darstellen, in einer Zeile einer Menüebene angeordnet sind.

2. Vorrichtung nach Anspruch 1, **dadurch gekennzeichnet, dass** die bei den jeweiligen Radiobetriebsarten durchführbaren Funktionen in einer zweiten Zeile der Menüebene angeordnet sind.

3. Vorrichtung nach Anspruch 1 oder 2, **dadurch gekennzeichnet, dass** die den Funktionen der Radiobetriebsarten zugeordneten Unterfunktionen in Menüeinträgen einer weiteren Menüebene des Displays (1) angeordnet sind.

4. Vorrichtung nach einem der Ansprüche 1 bis 3, **dadurch gekennzeichnet, dass** am Display (1) vom Bediensteller (2) nicht beeinflussbare fahrzeugbezogene Daten darstellbar sind.

5. Vorrichtung nach Anspruch 4, **dadurch gekennzeichnet, dass** die vom Bediensteller (2) nicht beeinflussbaren fahrzeugbezogenen Daten in wenigstens einem am Display (1) dafür vorgesehenen Darstellungsbereich (6) angeordnet sind.

6. Vorrichtung nach einem der Ansprüche 1 bis 5, **dadurch gekennzeichnet, dass** der jeweilige Radiobetrieb entweder durch den Bediensteller (2) oder am Radiogerät (4) selbst einstellbar ist und am Display (2) anzeigbar ist, wobei der jeweilige Radiobetrieb mittels des Cursors (3) entweder durch Betätigen des Bedienstellers (2) oder durch Bedienung am Radiogerät (4) und Betätigen des Bedienstellers (2) anwählbar ist.

7. Vorrichtung nach einem der Ansprüche 1 bis 6, **dadurch gekennzeichnet, dass** der jeweils ausgewählte Radiobetrieb durch weiteres Betätigen des Bedienstellers (2) aktivierbar ist.

8. Vorrichtung nach einem der Ansprüche 1 bis 7, **dadurch gekennzeichnet, dass** das Radiogerät (4) nur bei eingeschaltetem Betriebsstrom durch den Bediensteller (2) bedienbar ist.

9. Vorrichtung nach einem der Ansprüche 1 bis 8, **dadurch gekennzeichnet, dass** der Bediensteller (2) einen Cursorsteller aufweist, durch den der Cursor (3) schrittweise in Zeilen von einem Menüeintrag zum in der Bewegungsrichtung nächstfolgenden Menüeintrag bewegt ist.

10. Vorrichtung nach einem der Ansprüche 1 bis 9, **dadurch gekennzeichnet, dass** der Cursorsteller als Drehsteller (5) ausgebildet ist, der in bestimmte aufeinander folgenden Drehwinkelpositionen einstellbar ist, wobei der Cursor (3) auf dem Display (1) schrittweise zu den jeweiligen Menüeinträgen bewegt wird.

11. Vorrichtung nach einem der Ansprüche 1 bis 10, **dadurch gekennzeichnet, dass** die horizontale Bewegungsrichtung des Cursors (3) in einer Zeile des Displays (1) von der Drehrichtung des Drehstellers (5) abhängig ist.

12. Vorrichtung nach einem der Ansprüche 1 bis 11, **dadurch gekennzeichnet, dass** der Bediensteller (2), ferner eine durch Druck betätigbare Aktivierungseinrichtung zum Aktivieren des jeweils durch den Cursor (3) ausgewählten Menüeintrags aufweist.

13. Vorrichtung nach Anspruch 12, **dadurch gekennzeichnet, dass** die durch Druck betätigbare Aktivierungseinrichtung in den Drehsteller (5) integriert ist.

14. Vorrichtung nach einem der Ansprüche 1 bis 13, **dadurch gekennzeichnet, dass** der Zeilenwechsel des Cursors (3) von einem Zeilenende zum Anfang der nächstfolgenden Zeile durch Drehung des Drehstellers (5) in eine erste Richtung, insbesondere nach rechts und ein Zeilenwechsel des Cursors vom Anfang einer Zeile zum Ende einer vorhergehenden Zeile durch Drehen des Drehstellers (5) in eine zweite Richtung, insbesondere nach links gesteuert sind.

15. Vorrichtung nach einem der Ansprüche 1 bis 14, **dadurch gekennzeichnet, dass** nur der jeweils aktivierte Menüeintrag am Display (1) angezeigt ist.

16. Vorrichtung nach Anspruch 15, **dadurch gekennzeichnet, dass** der Menüeintrag bzw. die Menüeinträge, welche zum angezeigten Menüeintrag übergeordnete Funktionen angeben, ebenfalls dargestellt sind.

17. Vorrichtung nach einem der Ansprüche 1 bis 13, **dadurch gekennzeichnet, dass** die Menüeinträge am Display (1) in mehreren Menüebenen angeordnet sind.

18. Vorrichtung nach Anspruch 17, **dadurch gekennzeichnet, dass** die jeweiligen Menüebenen wenigstens zwei Zeilen für die Menüeinträge aufweisen.

19. Vorrichtung nach einem der Ansprüche 1 bis 18, **dadurch gekennzeichnet, dass** gleichwertige Menüeinträge in einer Zeile einer Menüebene angeordnet sind.

20. Vorrichtung nach einem Ansprüche 1 bis 19, **dadurch gekennzeichnet, dass** das Display (1) zwischen einer Drehzahlanzeigeeinrichtung (10) und einer Anzeigeeinrichtung (11) für die Fahrzeuggeschwindigkeit am Armaturenbrett des Kraftfahrzeugs angeordnet ist.

21. Vorrichtung nach einem der Ansprüche 1 bis 20, **dadurch gekennzeichnet, dass** bei am Radiogerät (4) selbst vorgenommenen Einstellungen, die Menüeinstellungen des Radiogerätes (4) am Display ausblendet sind.

22. Vorrichtung nach einem der Ansprüche 1 bis 21, **dadurch gekennzeichnet, dass** bei angewähltem Radiomenü die Menüeinstellungen des Radiogerätes (4) im Display (1) mit der gerade aktiven Funktion, welche vom Cursor (3) markiert wird, angezeigt werden, unabhängig davon, ob die Einstellungen am Radiogerät (4) selbst oder am Bediensteller (2) vorgenommen sind.

23. Vorrichtung nach einem der Ansprüche 1 bis 22, **dadurch gekennzeichnet, dass** autonom dargestellte Daten des Radiogerätes zusammen mit ebenfalls autonomen fahrzeugbezogenen Daten gleichzeitig am Display (1) darstellbar sind.

24. Vorrichtung nach einem der Ansprüche 1 bis 23, **dadurch gekennzeichnet, dass** die autonom dargestellten Anzeigen des Radiogerätes (4) mit den Einstellungen im Radiomenü korrespondieren und Änderungen der Einstellungen im Radiogerät (4) durch das Radiomenü gleichzeitig in der autonomen Anzeige der Radioeinstellung am Display (1) dargestellt sind.

25. Vorrichtung nach einem der Ansprüche 1 bis 24, **dadurch gekennzeichnet, dass** durch autonome vom Betrieb des Fahrzeugs verursachte Meldungen der Radiobetrieb beendet ist.

26. Vorrichtung nach Anspruch 25, **dadurch gekennzeichnet, dass** bei erneutem Aufruf der Menüauswahl die vor der Unterbrechung der Anzeige des Radiobetriebs eingestellte Menüdarstellung für den Radiobetrieb am Display (1) angezeigt wird.

27. Vorrichtung nach Anspruch 25, **dadurch gekennzeichnet, dass** bei Unterbrechung des Radiobetriebs während des Einstellbetriebs des Radiogerätes bei erneutem Aufruf der Menüauswahl für das Radio die Menüdarstellung für den Neubeginn des Einstellbetriebs am Display (1) eingestellt ist.

28. Vorrichtung nach einem der Ansprüche 1 bis 27, **dadurch gekennzeichnet, dass** durch die im Display vorgesehene Anzeigesteuerung für eine vom Radiogerät (4) gemeldete veränderte Einstellung Signale für die geänderte Displayanzeige generiert sind.

## Claims

1. Device for the central display of vehicle-related data in a motor vehicle, with a display (1) arranged in the driver's field of vision and a cursor (3) for selecting the indicated data by actuating an operating element (2) arranged in the driver's vicinity, whereby a radio unit (4), which is installed in the vehicle and can be independently operated as such, can be operated by means of the operating element (2) and, when the radio unit (4) is switched on, the operating modes and functions of the radio unit (4) are indicated in the menu presentation on the display (1), **characterised in that** the menu items denoting radio operating modes such as radio reception, cassette operation, CD player operation and the switch-off function are arranged in one line on a menu level.

2. Device according to Claim 1, **characterised in that** the functions which can be carried out in the respective radio operating modes are arranged in a second line on the menu level.

3. Device according to Claim 1 or 2, **characterised in that** the subfunctions allocated to the functions of the radio operating modes are arranged in the menu entries of another menu level of the display (1).

4. Device according to one of the Claims 1 to 3, **characterised in that** vehicle-related data which cannot be influenced by the operating element (2) can be presented on the display (1).

5. Device according to Claim 4, **characterised in that** vehicle-related data which cannot be influenced by the operating element (2) are arranged in at least one presentation area (6) on the display (1), which presentation area (6) is intended for this purpose.

6. Device according to one of the Claims 1 to 5, **characterised in that** the respective radio operating mode can be set either by the operating element (2) or on the radio unit (4) itself and can be indicated on the display (2), whereby the respective radio operating mode can be selected by means of the cursor (3) either by actuating the operating element (2) or by actuating the controls on the radio unit (4) and the operating element (2).

7. Device according to one of the Claims 1 to 6, **characterised in that** the radio operating mode selected can be activated by further actuating the operating element (2).

8. Device according to one of the Claims 1 to 7, **characterised in that** the radio unit (4) can be operated by means of the operating element (2) only if the operating current is switched on.

9. Device according to one of the Claims 1 to 8, **characterised in that** the operating element (2) has a cursor setter by which the cursor (3) is moved step by step in the lines from one menu entry to the next in the direction of motion.

10. Device according to one of the Claims 1 to 9, **characterised in that** the cursor setter is designed as a rotary setter (5) which can be brought into certain angle-of-rotation positions which follow one after the other, the cursor (3) being moved step by step to the respective menu entries on the display (1).

11. Device according to one of the Claims 1 to 10, **characterised in that** the movement of the cursor (3) in horizontal direction within one line of the display (1) is dependent on the direction in which the rotary setter (5) is turned.

12. Device according to one of the Claims 1 to 11, **characterised in that** the operating element (2) is also provided with an activation device which can be actuated by pressure and is designed for activating the menu entry selected with the aid of the cursor (3).

13. Device according to Claim 12, **characterised in that** the activation device which can be actuated by pressure is integrated into the rotary setter (5).

14. Device according to one of the Claims 1 to 13, **characterised in that** the change of line of the cursor (3) from one end of line to the start of the next following line is controlled by turning the rotary setter (5) in a first direction, particularly to the right, and a change of line of the cursor from the start of a line to the end of a foregoing line is controlled by fuming the rotary setter (5) in a second direction, particularly to the left.

15. Device according to one of the Claims 1 to 14, **characterised in that** only the menu entry activated is indicated on the display (1).

16. Device according to Claim 15, **characterised in that** only the menu entry(ies) which in respect of the menu entry displayed indicate higher-ranking functions are also presented.

17. Device according to one of the Claims 1 to 13, **characterised in that** the menu entries on the display (1) are arranged over several menu levels.

18. Device according to Claim 17, **characterised in that** the respective menu levels have at least two lines for the menu entries.

19. Device according to one of the Claims 1 to 18, **characterised in that** equivalent menu entries are arranged in one line on one menu level.

20. Device according to one of the Claims 1 to 19, **characterised in that** the display (1) is arranged between an engine speed indicator (10) and an indicator (11) for the vehicle speed on the instrument panel of the motor vehicle.

21. Device according to one of the Claims 1 to 20, **characterised in that** if the settings are made on the radio unit (4) itself, the menu settings of the radio unit (4) are not shown on the display.

22. Device according to one of the Claims 1 to 21, **characterised in that** if the radio menu is selected the menu settings of the radio unit (4) on the display (1) are indicated with the function which is active at the respective point in time and marked by the cursor (3), irrespective of whether the settings are made on the radio unit (4) itself or on the operating element (2).

23. Device according to one of the Claims 1 to 22, **characterised in that** autonomously presented data of the radio unit can be simultaneously indicated together with likewise autonomous vehicle-related data on the display (1).

24. Device according to one of the Claims 1 to 23, **characterised in that** the autonomously presented data of the radio unit (4) correspond to the settings in the radio menu and that changes to the settings in the radio unit (4) are simultaneously indicated in the autonomous indicator for the radio setting on the display (1) by the radio menu.

25. Device according to one of the Claims 1 to 24, **characterised in that** radio operation is stopped by autonomous messages prompted by the operation of the vehicle.

26. Device according to Claim 25, **characterised in that** if the menu selection is called up again the menu for the radio operating mode which was on the display (1) before indication of the radio operating mode was interrupted will be indicated again.

27. Device according to Claim 25, **characterised in that** if the radio operating mode is interrupted during the setting operation for the radio unit and the menu selection for the radio is called up again, the menu presentation for the new start of the setting operation in the display (1) will appear.

28. Device according to one of the Claims 1 to 27, **characterised in that**, installed in the display, the display control for changed settings reported by the radio unit generates signals for the changed display.

## Revendications

1. Dispositif d'affichage centralisé de données relatives au véhicule dans un véhicule à moteur avec un écran (1) disposé dans le champ de vision du chauffeur et un curseur (3) pour sélectionner les données affichées par l'actionnement de commutateurs dans une console commande (2) disposés à proximité du chauffeur, auquel cas la console de commande (2) permet en outre de commander un appareil de radio (4) intégré dans le véhicule, cet appareil de radio représentant une unité autonome, commandable directement, et que, lorsque l'appareil de radio (4) est mis sous tension, les types de fonctionnement et les fonctions de l'appareil de radio (4) sont représentés à chaque fois par des entrées dans des menus dans une représentation sous forme de menu à l'écran (1), **caractérisé par le fait que** les entrées de menu qui représentent des types de fonctionnement de la radio tels que la réception de la radio, le fonctionnement du lecteur de cassettes, le fonctionnement du lecteur de CD et la mise hors tension sont disposées sur une ligne d'un plan de menu.

2. Dispositif selon la revendication 1, **caractérisé par le fait que** les fonctions exécutables en fonction de chaque type de fonctionnement de la radio sont disposées sur une deuxième ligne du plan de menu.

3. Dispositif selon la revendication 1 ou 2, **caractérisé par le fait que** les sous-fonctions attribuées aux fonctions des types de fonctionnement de la radio sont disposées dans des entrées de menu d'un autre plan de menu de l'écran (1).

4. Dispositif selon une des revendications 1 à 3, **caractérisé par le fait que** des données relatives au véhicule, non influençables par la console de commande (2) peuvent être représentées sur l'écran (1).

5. Dispositif selon la revendication 4, **caractérisé par le fait que** les données relatives au véhicule, non influençables par la console de commande (2) sont disposées dans au minimum une zone de représentation (6) prévue à cet effet sur l'écran (1).

6. Dispositif selon une des revendications 1 à 5, **caractérisé par le fait que** chaque état de fonctionnement de la radio est réglable directement soit par le biais de la console de commande (2), soit directement sur l'appareil de radio (4) et affichable sur l'écran (2), auquel cas chaque état de fonctionnement de la radio peut être sélectionné au moyen du curseur (3) soit en actionnant les commutateurs de la console de commande (2), soit en utilisant les touches sur l'appareil de radio (4) et en actionnant les commutateurs de la console de commande (2).

7. Dispositif selon une des revendications 1 à 6, **caractérisé par le fait que** chaque état de fonctionnement de la radio sélectionné peut être activé par l'actionnement d'autres commutateurs de la console de commande (2).

8. Dispositif selon une des revendications 1 à 7, **caractérisé par le fait que** l'appareil de radio (4) peut être commandé par les commutateurs de la console de commande (2) seulement lorsque le courant de service est mis.

9. Dispositif selon une des revendications 1 à 8 **caractérisé par le fait que** les commutateurs de la console de commande (2) présentent un déplaceur de curseur grâce auquel le curseur (3) peut progressivement être déplacé dans des lignes d'une entrée de menu à l'entrée de menu suivante dans le sens de déplacement.

10. Dispositif selon une des revendications 1 à 9, **caractérisé par le fait que** le déplaceur de curseur est formé comme un commutateur rotatif (5) qui est réglable dans certaines positions rotatives se suivant, auquel cas le curseur (3) est déplacé progressivement vers les différentes entrées de menu sur l'écran (1).

11. Dispositif selon une des revendications 1 à 10, **caractérisé par le fait que** le sens de déplacement horizontal du curseur (3) sur une ligne de l'écran (1) dépend du sens de rotation du commutateur rotatif (5).

12. Dispositif selon une des revendications 1 à 11, **caractérisé par le fait que** la console de commande (2) présente en outre un dispositif d'activation commandable par pression pour activer chacune des entrées de menu sélectionnée avec le curseur (3).

13. Dispositif selon la revendication 12, **caractérisé par le fait que** le dispositif d'activation commandable par pression est intégré dans le commutateur rotatif (5)

14. Dispositif selon une des revendications 1 à 13, **caractérisé par le fait que** le changement de ligne du curseur (3) de la fin d'une ligne au début de la ligne suivante est commandé par la rotation du commutateur rotatif (5) dans un premier sens, plus exactement vers la droite, et le changement de ligne du curseur du début d'une ligne à la fin d'une ligne précédente est commandé par la rotation du commutateur rotatif (5) dans un deuxième sens, plus exactement vers la gauche.

15. Dispositif selon une des revendications 1 à 14, **caractérisé par le fait que** seule l'entrée de menu activée à chaque fois est affichée sur l'écran (1).

16. Dispositif selon la revendication 15, **caractérisé par le fait que** l'entrée ou les entrées de menu qui indique(nt) les fonctions supérieures à l'entrée de menu affichée peut/peuvent également être représenté(es).

17. Dispositif selon une des revendications 1 à 13, **caractérisé par le fait que** les entrées de menu sont disposées sur l'écran (1) sur plusieurs plans de menu.

18. Dispositif selon la revendication 17, **caractérisé par le fait que** les différents plans de menu présentent au minimum deux lignes pour les entrées de menu.

19. Dispositif selon une des revendications 1 à 18, **caractérisé par le fait que** les entrées de menu équivalentes sont disposées sur une ligne d'un plan de menu.

20. Dispositif selon une des revendications 1 à 19, **caractérisé par le fait que** l'écran (1) est disposé entre le dispositif d'affichage du régime (10) et un dispositif d'affichage (11) de la vitesse du véhicule sur le tableau de bord d'un véhicule à moteur.

21. Dispositif selon une des revendications 1 à 20, **caractérisé par le fait que**, lorsque les réglages sont apportés directement sur l'appareil de radio (4), les paramètres de menu de l'appareil de radio (4) sont masqués sur l'écran.

22. Dispositif selon une des revendications 1 à 21, **caractérisé par le fait que**, lorsque le menu Radio est sélectionné, les paramètres de menu de l'appareil de radio (4) sont affichés avec la fonction active momentanément qui est marquée par le curseur (3) indépendamment du fait que les réglages sont apportés directement sur l'appareil de radio (4) ou sur la console de commande (2).

23. Dispositif selon une des revendications 1 à 22, **caractérisé par le fait que** les données représentées de manière autonome de l'appareil de radio peuvent être représentées simultanément avec les données autonomes relatives au véhicule sur l'écran (1)

24. Dispositif selon une des revendications 1 à 23, **caractérisé par le fait que** les affichages représentés de manière autonome de l'appareil de radio (4) correspondent aux paramètres dans le menu Radio et que les modifications des paramètres sur l'appareil de radio (4) par le menu Radio sont représentées simultanément sur l'affichage autonome des paramètres de la radio sur l'écran (1).

25. Dispositif selon une des revendications 1 à 24, **caractérisé par le fait que** les messages autonomes résultant du fonctionnement du véhicule coupe le fonctionnement de la radio.

26. Dispositif selon la revendication 25, **caractérisé par le fait que**, lors d'un nouvel appel de la sélection des menus, la représentation de menu du fonctionnement de la radio, réglée avant l'interruption de l'affichage du fonctionnement de la radio, est affichée sur l'écran (1).

27. Dispositif selon la revendication 25, **caractérisé par le fait que**, lors de l'interruption du fonctionnement de la radio pendant le réglage de l'appareil de radio, la représentation de menu pour le redémarrage du processus de réglage apparaît à l'écran (1) lors d'un nouvel appel de la sélection des menus.

28. Dispositif selon une des revendications 1 à 27, **caractérisé par le fait que**, par la commande d'affichage prévue sur l'écran pour un réglage modifié annoncé par l'appareil de radio (4), des signaux d'affichage d'écran modifié sont générés.
